# EUROPEAN PATENT SPECIFICATION

(11) **EP 1 924 760 B1**
(45) Date of publication and mention of the grant of the patent: **19.01.2011**
(21) Application number: 06778553.5
(22) Date of filing: 30.08.2006
(51) Int. Cl.: F01N 3/04, F02B 37/02, F02M 25/00, F01D 25/00

(54) **ARRANGEMENT AND METHOD IN CONNECTION WITH A PISTON ENGINE HAVING A TURBOCOMPRESSOR**
ANORDNUNG UND VERFAHREN IN VERBINDUNG MIT EINEM KOLBENMOTOR MIT EINEM TURBOVERDICHTER
AGENCEMENT ET PROCÉDÉ EN ASSOCIATION À UN MOTEUR À PISTON COMPORTANT UN TURBOCOMPRESSEUR

(30) Priority: 16.09.2005 FI 20055493
(43) Date of publication of application: 28.05.2008
(73) Proprietor: Wärtsilä Finland Oy, 65380 Vaasa (FI)
(72) Inventor: PARO, Daniel, FI-66530 Kvevlax (FI); MÄKI, Janne, FI-65200 Vaasa (FI)
(74) Representative: Nissinen, Jyrki Antero
(86) International application number: PCT/FI2006/050370
(87) International publication number: WO 2007/031599

(56) References cited:
- WO-A-02/04099
- WO-A-02/073013
- WO-A-2005/038229
- DE-A1- 3 421 355
- GB-A- 2 300 024

## Description

The present invention relates to a method used in connection with a piston engine having a turbo-compressor.

In engine technology it is known to use turbo-compressors for increasing engine power. A turbo-compressor comprises a compressor part by means of which pressurized combustion air is fed to the engine. A turbo-compressor further comprises a turbine part that runs the compressor. The exhaust gases from the engine are directed to the turbine that transforms the energy of the exhaust gases into compressor drive power.

Nitrogen oxides (NOx) are formed in high combustion temperatures in the combustion chamber of a cylinder of a piston engine, the nitrogen oxides being conveyed into the atmosphere with the exhaust gases. Due to the negative environmental effects of the nitrogen oxide emissions it is desirable to avoid their formation (primary methods) or formed nitrogen oxides are removed from the exhaust gases (secondary methods).

Adding water with the combustion air to the actual combustion reduces the nitrogen oxide emissions. Water reduces the combustion temperature in the cylinder, whereby the amount of nitrogen oxides formed is reduced. In practice, adding water to the combustion process of a piston engine is carried out in two alternative ways: Water can be injected either directly into the combustion chamber of a cylinder or it can be mixed with the combustion air prior to introducing it into the cylinder. In both cases the injection of water into the combustion air causes an increase in the mass flow of the exhaust gas passing through the turbine. The increase of the exhaust gas mass flow increases the rotation speed of the turbine causing the risk of overspeeding. Excessive increase of the rotation speed can be avoided by dimensioning the turbine for a larger mass flow, but thereby the operation of the turbo-compressor is not optimal in situations in which moistening of the combustion air is not activated.

WO 02/073013 A1 discloses a method for cleaning exhaust gases of a combustion engine. Combustion air is moistened by spraying water mist into a space leading to the combustion chamber of the engine. In addition, exhaust gas from the engine is purified by washing.

WO 02/04099 A1 shows a method for purifying exhaust gas of an internal combustion engine by spraying water mist into exhaust gas. Gray waste water of a ship can be used as spraying water.

WO 2005/038 229 A shows a method for cleaning exhaust gases of a combustion engine. Combustion air is moistened by spraying mater into a spare leading to the combustion chamber of the engine.

DE 34 21 355 A shows a method of avoiding overspeeding of a turbine of turbocharger, by adding mater to the exhaust gases upstream of the turbine.

The object of this invention is to provide a solution in which the rotation speed of the turbine of the piston engine can be controlled when the moistening of the combustion air is in use.

The invention is based on that the exhaust gas directed from the piston engine to the turbine is cooled by mixing water into it white moistening the combustion air.

More specifically, the invention is characterized by what is disclosed in the characterizing part of claim 1.

Gonsiderable advantages are achieved by means of the invention.

Cooling of the exhaust gas directed to the turbine compensates the turbine rotation speed increasing effect of the moistening of the combustion air, whereby the running of the turbine at too high a rotation sped can be prevented. A turbine optimized for non-moistened conditions can be used in connection with the engine. Cooling of the exhaust gas further reduces the thermic loading of the components of the turbine. In engines installed in ships, so-called grey waste water, i.e. water that has been used for e.g. washing, washing dishes, cooking and for laundry, can be used as exhaust gas cooling water. Thus, the operating expenses of exhaust gas cooling are low. Further the arrangement according to the invention can be made as a simple construction and it can also easily be arranged in connection with the engine.

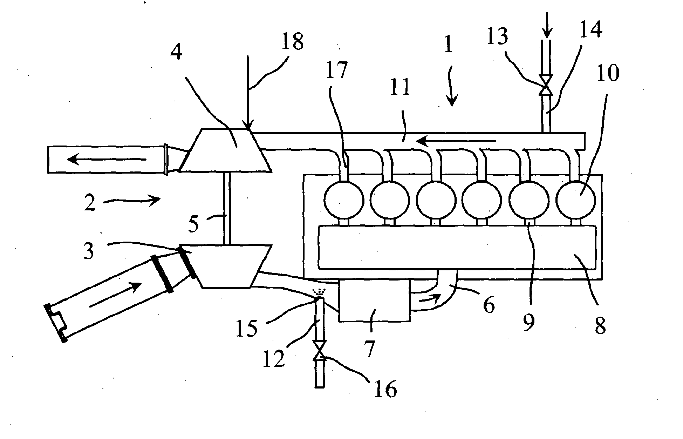

In the following, the invention is described in an exemplary way, with reference to the appended drawing, schematically showing one arrangement according to the invention.

The drawing illustrates a piston engine 1 having a turbo-compressor 2. The turbo-compressor 2 comprises a compressor 3 and a turbine 4 connected to each other via a drive shaft 5. The drive shaft 5 is supported by bearings on the body of the turbo-compressor 2. The task of the compressor 3 is to pressurize air and introduce it as combustion air for the engine 1. The compressor 3 comprises a rotatable rotor having blades for pressurizing the combustion air to be introduced to the engine 1. A flow channel 6 is arranged on the high-pressure side of the compressor 3, i.e. between the compressor 3 and the combustion chambers 10 of the engine for introducing the pressurized combustion air into the cylinders 10. A heat exchanger 7 is arranged into the flow channel 6 for cooling the combustion air. The flow channel 6 further comprises a charge air receiver 8 arranged at a place subsequent to the heat exchanger 7 in the flow direction of the combustion air. The flow channel 6 also comprises inlet channels 9 arranged between each cylinder 10 and the receiver 8 for introducing combustion air from the receiver 8 to the cylinders 10.

An exhaust gas channel 11 is arranged between the cylinders 10 and the high-pressure side of the turbine 4 for directing the exhaust gas from the engine 1 to the turbine 4. The first end of the exhaust gas channel 11 is attached to the turbine 4. The exhaust gas channel 11 is arranged parallel with the line formed by cylinders 10. The second end of the exhaust gas channel 11 extends to the vicinity of the cylinder most distant from the turbine 4. Each cylinder 10 is connected to the exhaust gas channel 11 by means of a branch tube 17. The turbine 4 comprises a rotor having blades, the rotor being rotated by exhaust gas from the engine 1. The engine 1 additionally comprises fuel feed means (not shown) for introducing fuel into the cylinders 10.

The engine 1 is provided with a combustion air moistening apparatus by means of which the moisture content of the combustion air can be increased while the engine 1 is running. Moistening the combustion air reduces the amount of nitrogen oxides (NOx) formed in the combustion. The combustion air is moistened by spraying water to mix with the combustion air. Water is mixed with the combustion air in the flow channel 6 prior to introducing combustion air into the heat exchanger 7. The moistening apparatus of the combustion air comprises a feed tube 12 connected to the water treatment system. Injectors 15 opening into the flow channel 6 are connected to the feed tube 12, from which injectors water is introduced in drop or mist form into the flow channel 6 to a point prior the heat exchanger 7 in the flow direction of the combustion air. The feed tube additionally comprises a valve 16 by means of which the flow of water to injectors 15 can be allowed or prevented. The combustion air can alternatively be moistened by means of an apparatus feeding water directly to the cylinders 10.

The turbine 4 comprises feed means 18 for introducing cleaning agent into the exhaust gas flow channel located in the turbine 4. The cleaning agent is used for removing carbon deposits and/or other impurities accumulated on the surfaces of the turbine 4. Carbon is removed specially from the surface of the nozzle ring located in the turbine 4 and from the flow channel enveloping the rotor blades. The nozzle ring comprises vanes deflecting the flow direction of the exhaust gas so as to suit the rotor blades and for increasing the flow speed of the exhaust gas. The cleaning agent feed means 18 comprise nozzles from which the cleaning agent is injected into the exhaust gas flow channel to a place before the nozzle ring and an arrangement for directing cleaning agent to the nozzles. The arrangement disclosed in US Patent 5,944,483 can, for example, be used as feed means 18 of the cleaning liquid, the arrangement allowing the cleaning 4 with wet cleaning method, i.e. either with a heat shock type of cleaning or with a wash-type cleaning.

The exhaust gas to be directed into the turbine 4 is cooled by mixing water into it by means of feed means 14 arranged in connection with the exhaust gas channel 11. The feed means comprise a tube 14 opening into the exhaust gas channel 11. Preferably the tube 14 opens into a place at the exhaust gas channel 11 being between the branch tube 17 nearest to the turbine 4 and the second end of the exhaust gas channel 11. In an embodiment according to the drawing the tube 14 opens into the place between the two branch tubes 17 located farthest away from the turbine 4. The tube 14 is provided with a valve 13 for allowing or preventing the injection of water into the exhaust gas channel 11 for adjusting the injected amount of water. A nozzle is provided at the end of the tube 14 for forming the water to be introduced into the exhaust gas channel for facilitating vaporizing. Water is introduced at such a distance from the turbine 4 that the amount of water to be injected has time to totally or essentially totally vaporize or before arriving at the turbine 4.

As the engine runs, combustion air is directed into the compressor 3 for increasing its pressure above ambient pressure. The pressurized air is directed into the flow channel 6 located in the high-pressure side of the compressor 3. Water is injected into the air in the flow channel 6 by means of injector nozzles 15. The amount of the water to be mixed with the combustion air is adjusted to be such that the combustion air is saturated or essentially saturated. The amount of water introduced into the combustion air is adjusted by opening and closing a suitable amount of water injection nozzles 15 as necessary, while the injection pressure at each nozzle is about constant. Thus, both a preferable atomising or misting of the water and a correct amount of water in the combustion air, are achieved.

The moistened combustion air is directed to the heat exchanger 7 and warmed or cooled by means of a heat exchanger 7 into a temperature of typically about 70 - 75 °C. Combustion air can be heated or cooled by means of a low-temperature cooling liquid of the engine 1 directed into the heat exchanger 7. Subsequent to heating/cooling the combustion air is directed into the charge air receiver 8. From the receiver 8 the combustion air is directed along inlet channels 9 into cylinders 10. Fuel, such as heavy fuel oil, is injected into the cylinders 10, the fuel being combusted with combustion air in the combustion chambers 10 of the cylinders. The exhaust gas formed in the combustion is directed along the exhaust channel 11 to the turbine 4. As the flow traverses the turbine 4, it rotates the rotor of the turbine 4, the rotation of which is transmitted via drive shaft 5 to the rotor of the compressor 3.

When the combustion air is being moistened, i.e. when water is injected from the feed tube 12 to mix with the combustion air, water is simultaneously directed from the tube 14 to the exhaust gas channel 11. Water is introduced into the exhaust gas channel 11, especially when the engine 1 is running at full speed or at nearly full speed. Water is vaporized in the exhaust gas channel 11 and it travels along with the exhaust gas to the turbine 4. The injection of water 11 is begun simultaneously with the moistening of the combustion air. When the moistening of the combustion air is ended the introduction of water into the exhaust gas channel 11 is stopped as well.

Introduction of water into the exhaust gas channel 11 reduces the temperature of the exhaust gas being directed to the turbine 4. This will prevent an increase of the rotation speed of the turbine 4, caused by the increase of mass flow due to moistening the combustion air. The mass flow of the water to be introduced into the exhaust gas channel 11 is determined case by case to suit each application and the load conditions of the engine. The mass flow of the water to be introduced into the exhaust gas channel 11 is adjusted so that the increase of the rotation speed of the turbine 4 is compensated wholly or essentially wholly. The mass flow of the water to be introduced into the exhaust gas channel 11 is adjusted by means of valve 13. The valve is controlled by the engine control system on the basis of the rotational speed of the turbine 4.

When it is desired to remove the carbon deposit and other impurities accumulated in turbine 4, the turbine cleaning sequence is started. Thus, cleaning agent, such as water, is injected into the turbine 4 while the engine 1 is running. Cleaning agent is conveyed by the injection pressure and with the exhaust gas flow to the surfaces having carbon deposits, such as the surface of the nozzle ring and the surface of the exhaust gas channel surrounding the rotor. The cleaning effect of the cleaning agent can be either of the washing type or the heat shock type. In a washing type cleaning the cleaning effect is based on the mechanical effect of the cleaning agent droplets and the dissolution of dirt matter in the cleaning agent. In heat shock type of cleaning the cleaning effect is based on the different heat expansion properties of the dirt layer and its gripping surface and the release effect due to sudden cooling.

In order to achieve an optimal cleaning result the temperature of the exhaust gas to be directed to the turbine 4 must be at a suitable level during the cleaning sequence. The temperature of the exhaust gas going to the turbine 4 is measured with a measurement device located at the exhaust gas channel 11. In a washing type cleaning the temperature of the exhaust gas being directed to the turbine 4 must typically be under 450 °C and in heat shock cleaning the temperature must be under 500 °C. In heat shock cleaning the temperature of the exhaust gas must, however, be over 430 °C. As the engine 1 runs at full speed, the temperature of the exhaust gas arriving at the turbine 4 is typically 530 - 600 °C, and therefore the power of the engine must be lowered for reducing the temperature of the exhaust gases or the exhaust gases must be cooled during the cleaning sequence. The cleaning of the turbine 4 can be carried out when the engine 1 runs at full speed or at nearly full speed, when the water injection into the exhaust gas channel 11 is in use. Thus, the amount of water injected from the tube 14 into the exhaust gas channel 11 is adjusted so that the temperature of the exhaust gas going to the turbine 4 is suitable for the cleaning method. The cleaning of the turbine 4 can be carried out while the combustion air is being moistened.

Ships are usually provided with separate waste water systems for so-called grey waste waters (water used e.g. for washing, washing dishes, cooking and for laundry) and brown waste water (waste water from the toilets). In engines used in ships the exhaust gas is cooled by mixing it with the grey waste water of the ship. The cooling water of the exhaust gas can partly be grey waste water and partly other water or grey waste water only.

## Claims

1. A method in connection with a piston engine (1) used in a ship, the piston engine (1) having a turbo-compressor (2), in which method
- combustion air is pressurized with a compressor (3),
- pressurized combustion air is moistened,
- fuel is combusted in cylinders (10) of the engine (1) with the combustion air, and
- exhaust gas formed during the combustion is directed to a turbine (4), **characterized in that** exhaust gas directed to the turbine (4) is simultaneously cooled by mixing grey waste water of the ship therewith.

2. A method according to claim 1, **characterized in that** water is mixed with the exhaust gas at such a distance from the turbine (4) that the injected amount of water is vaporized prior to being directed into the turbine (4).

3. A method according to claim 1 or 2, **characterized in that** the mass flow of the water to be mixed with the exhaust gas is adjusted so that the increase of the rotational speed of the turbine (4) due to the moistening of the combustion air is compensated essentially wholly.

4. A method according to any of the above claims, **characterized in that** clean ing agent is introduced into the turbine (4).

5. A method according to any of the above claims, **characterized in that** the exhaust gas being directed to the turbine (4) is cooled to a temperature less than 500 °C, preferably to a temperature below 450 °C.

## Patentansprüche

1. Verfahren in Verbindung mit einem Kolbenmotor (1), der in einem Schiff verwendet wird, wobei der Kolbenmotor (1) einen Turboverdichter (2) aufweist, wobei in dem Verfahren
- Verbrennungsluft mit einem Verdichter (3) unter Druck gesetzt wird,
- unter Druck gesetzte Verbrennungsluft befeuchtet wird,
- Brennstoff in Zylindern (10) des Motors (1) mit der Verbrennungsluft verbrannt wird und
- Abgas, das während der Verbrennung gebildet wird, zu einer Turbine (4) geleitet wird,
**dadurch gekennzeichnet, dass** Abgas, das zur Turbine (4) geleitet wird, gleichzeitig durch Mischen von Grauwasser des Schiffes damit gekühlt wird.

2. Verfahren nach Anspruch 1, **dadurch gekennzeichnet, dass** Wasser mit dem Abgas in solch einem Abstand von der Turbine (4) gemischt wird, dass die eingespritzte Wassermenge verdampft ist, bevor es in die Turbine (4) geleitet wird.

3. Verfahren nach Anspruch 1 oder 2, **dadurch gekennzeichnet, dass** der Massenstrom des Wassers, das mit dem Abgas zu mischen ist, derart eingestellt wird, dass die Zunahme der Drehzahl der Turbine (4) aufgrund der Befeuchtung der Verbrennungsluft im Wesentlichen gänzlich kompensiert wird.

4. Verfahren nach einem der obigen Ansprüche, **dadurch gekennzeichnet, dass** Reinigungsmittel in die Turbine (4) eingebracht wird.

5. Verfahren nach einem der obigen Ansprüche, **dadurch gekennzeichnet, dass** das Abgas, das zur Turbine (4) geleitet wird, auf eine Temperatur kleiner als 500 °C, vorzugsweise auf eine Temperatur unter 450 °C gekühlt wird.

## Revendications

1. Procédé en association à un moteur à piston (1) employé dans un bâteau, le moteur à piston (1) comportant un turbocompresseur (2), dans lequel procédé
- l'air de combustion est pressurisé avec un compresseur (3),
- l'air de combustion pressurisé est humidifié,
- le carburant est brûlé dans des cylindres (10) du moteur (1) avec l'air de combustion, et
- le gaz d'échappement formé durant la combustion est dirigé vers une turbine (4),
**caractérisé en ce que** le gaz d'échappement dirigé vers la turbine (4) est simultanément refroidi en mélangeant les eaux grises du bâteau avec celui-ci.

2. Procédé selon la revendication 1, **caractérisé en ce que** l'eau est mélangée avec le gaz d'échappement à une telle distance de la turbine (4) que la quantité d'eau injectée est vaporisée avant d'être dirigée dans la turbine (4).

3. Procédé selon la revendication 1 ou 2, **caractérisé en ce que** le débit massique de l'eau devant être mélangée avec le gaz d'échappement est ajusté de façon à ce que l'augmentation de la vitesse de rotation de la turbine (4) due à l'humidification de l'air de combustion soit compensée essentiellement en intégralité.

4. Procédé selon l'une quelconque des revendications précédentes, **caractérisé en ce que** de l'agent de nettoyage est introduit dans la turbine (4).

5. Procédé selon l'une quelconque des revendications précédentes, **caractérisé en ce que** le gaz d'échappement en train d'être dirigé dans la turbine (4) est refroidi à une température inférieure à 500°C, de préférence à une température en-dessous de 450°C.
